# EUROPEAN PATENT SPECIFICATION

(11) **EP 2 706 328 B1**
(45) Date of publication and mention of the grant of the patent: **11.03.2020**
(21) Application number: 13152559.4
(22) Date of filing: 24.01.2013
(51) Int. Cl.: G01F 3/10

(54) **Tri-lobe flowmeter rotor with partially open core structure**
Dreilappiger Durchflussmesserrotor mit teilweise offener Kernstruktur
Rotor de débitmètre tri-lobe avec structure de noyau partiellement ouverte

(30) Priority: 07.09.2012 AU 2012903894
(43) Date of publication of application: 12.03.2014
(73) Proprietor: Filton Engineering Ltd., Rustington, West Sussex BN16 3BZ (GB)
(72) Inventor: Luker, Graham James, Taren Point, New South Wales 2229 (AU); Fuller, Wayne Frederick, Taren Point, New South Wales 2229 (AU)
(74) Representative: Gee, Steven William

(56) References cited:
- AU-A4- 2012 100 424
- US-A- 2 188 752
- US-B2- 8 082 784

## Description

### FIELD OF THE INVENTION

This invention relates to apparatus for fluid flow measurement. More particularly, although not exclusively, it discloses improvements in rotors for positive displacement flowmeters.

### BACKGROUND TO THE INVENTION

AU 2012 100 424 discloses a rotor for a flowmeter having three lobes with the rotor profile between the lobes being concave. The core of the rotor is solid.
US 8 082 784 discloses an impeller for a rotary positive displacement fluid meter having two lobes which, in order to reduce weight comprises a figure-eight shaped outer shell with hollow lobes.
US 2 188 752 discloses a fluid impeller for a fluid apparatus, the impeller having three lobes which are formed of sheet metal construction with internal metal ribs which extend from a shaft radially outward to concave portions of the impeller between the lobes.

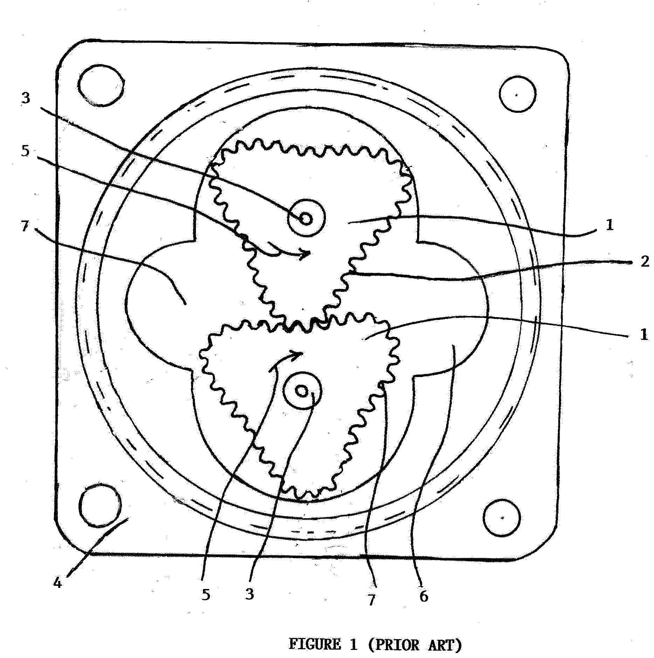

The positive displacement flowmeter of AU 2012 100424 is shown schematically in figure 1, and comprises a pair of meshed tri-lobe rotors 1 formed with gear teeth 2 and rotatable on spaced apart parallel axis 3 within a housing 4. The rotors are rotatably offset by 60 degrees and are meshed together in a critical relationship which causes said rotors to rotate in the direction of arrows 5 as fluid passes through from an inlet chamber 6 to an outlet chamber 7. The speed of rotation of the rotors is related to and indicative of the fluid volume flow through the meter per unit of time. Each rotor passes three displacements of fluid per revolution. The three lobe configuration of the rotors provides significant advantages over oval two lobe rotors in terms of vibration, backlash, noise and fluid bypass reduction. In order to provide further advantages over prior art metal rotors it has also been proposed to injection mould tri-lobe rotors from an engineering plastic such as RYTON or similar. The principal advantages of plastic rotors include the following:-
- Lower cost to cast
- Reduced machining
- High chemical resistance
- Broader application due to chemical resistance
- Greater accuracy due to lower inertia
- Greater turn down ratios
- Reduced drive energy
It has been found by the inventors however that the currently proposed solid core plastic tri-lobe rotors are difficult to produce with known injection moulding techniques and post treatments. This is because the critical tooth profiles and mating surfaces are compromised during cooling by distortion from surface sinking, shrinkage and stresses caused during the moulding process.
It is therefore an object of this invention to ameliorate the aforementioned disadvantages.
It is a further object to provide a tri-lobe rotor of reduced operating weight and inertia compared to solid core plastic rotors.

Accordingly a gear rotor of engineering plastic is provided as set out in the appended claims.

### BRIEF DESCRIPTION OF THE DRAWINGS

One currently preferred embodiment of the invention will now be described with reference to the attached drawings in which:-
Figures 2 and 3 show perspective and elevation views of a flowmeter gear rotor according to said invention from one end, and
Figures 4 and 5 show perspective and elevation view of the gear rotor from the opposite end.

### DETAILED DESCRIPTION OF THE PREFERRED EMBODIMENT

The gear rotor may comprise an external wall profile 8 forming three equally spaced lobes 9. Between adjacent lobes the profile is concaved at 10. The wall profile 8 has precisely shaped tooth profiles 11 with critical mating surfaces in order to mesh with another like rotor to perform volumetric fluid flow measurement as described earlier. Such tooth and surface profiles will not further discussed here in detail as they are well known to persons skilled in the art of flowmeter design and manufacture. In order to achieve the required stability for the tooth profiles and mating surfaces when using known injection moulding techniques and post treatments the inventors have found that a non-solid core structure for the rotor is advantageous. Therefore in accordance with the invention the core area of the rotor may be moulded with a central hub 12 for rotation on an axis (not shown) and a plurality of structural webs 13, 14 extending outwardly from said hub to support the external wall profile 8. Pairs of internal cavities 15 and 15A are defined at symmetrical positions within the core by these webs which run the length of the rotor. With this embodiment there are six webs. Some of the webs 13 preferably extend between the hub 12 and the crests of the lobes. Others of the webs 14 preferably extend between the hub 12 and the roots 17 of the profile concavities 10. This currently preferred arrangement for the webs has been found to enable a significant reduction in the mass of the rotor core while still providing a structurally robust support for the wall profile 8. It is also currently preferred that the dimensions of the webs and hub section of the rotor core be chosen such that the wall thickness remains similar throughout the casting. This ensures that the cooling time remains constant for all sections of the gear rotor moulding. The wall thickness varies with the size and mass of the casting and sizes may vary by those skilled in the art. This enables sufficient material flow during the injection moulding process but still avoids profile distortion from shrinkage, propping and stress buildup in the plastic during subsequent cooling and post treatment of the rotor.

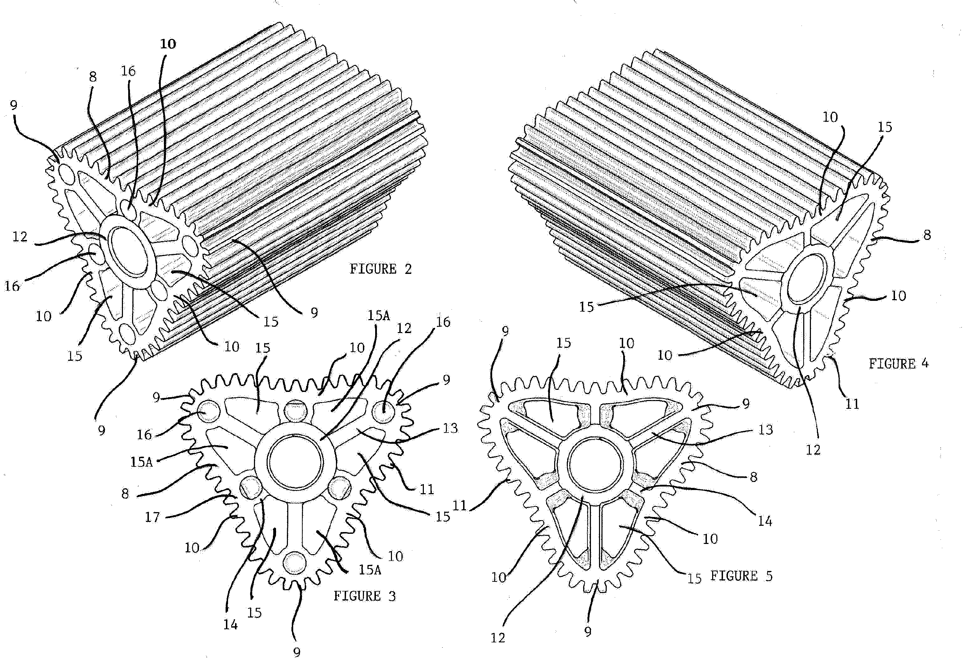

As best shown in figures 2 and 3 magnets 16 are preferably implanted in one end of the rotor at the junctions of the webs and wall profile 8. These activate an external reed switch, hall effect device or other means (not shown) to generate a signal related to rotor speed and thus volume flow through the meter.

It will thus be appreciated that this invention at least in the form of the embodiment disclosed discloses a novel and improved core structure for plastic tri-lobe flowmeter rotors. The cavitied core structure provides a structurally robust and serviceable plastic rotor which is able to be injection moulded to the required critical shapes for the tooth profiles and mating surfaces without the distortion arising with prior art solid cores. Clearly however the example described in only the currently preferred form of the invention and a variety of modifications may be made which would be apparent to a person skilled in the art. For example the number, shape, configuration and placement of the webs is not limited to the current embodiment and may be changed following further research and development work by the inventors. The invention is also limited to any specific plastic although an engineering plastic such as Ryton is currently preferred.

## Claims

1. A gear rotor of injection moulded engineering plastic for use in a positive displacement flowmeter, said rotor including a central hub (12) for rotation on an axis, an external wall profile (8) forming three equally spaced lobes (9) arranged symmetrically around said central hub (12) and with portions of said external wall profile (8) between said lobes being concave, **characterised by** a partially open core structure inside said wall profile (8) with internal cavities (15, 15A) defined between support webs (13, 14) extending between said central hub (12) of the rotor and said wall profile (8), in that at least some of said webs (13) extend between said hub and crests of the lobes and run the length of the rotor and others of said webs (14) extend between said central hub (8) and the roots (17) of the profile concavities (10) and run the length of the rotor.

2. The gear rotor as claimed in claim 1 wherein pairs of said internal cavities (15, 15A) are defined symmetrically within said core structure.

3. The gear rotor as claimed in claim 2 wherein the dimensions of the webs (13, 14) and central hub (12) are chosen such that wall thicknesses remain substantially constant throughout the rotor

4. The gear rotor as claimed in claim 3 wherein magnets (16) are implanted in one end of the rotor at junctions of the webs (13, 14) and external wall profile (8).

5. The gear rotor as claimed in claim 4 wherein said engineering plastic is Ryton.

## Patentansprüche

1. Zahnradrotor aus spritzgegossenem technischem Kunststoff zur Verwendung in einem volumetrischer Verdrängungsdurchflussmesser, wobei der Rotor eine zentrale Nabe (12) zur Drehung um eine Achse aufweist, wobei ein Außenwandprofil (8) drei gleich beabstandete, symmetrisch um die zentrale Nabe (12) angeordnete Lappen (9) bildet und wobei Teile des Außenwandprofils (8) zwischen den Lappen konkav sind, **gekennzeichnet durch** eine teilweise offene Kernstruktur innerhalb des Wandprofils (8) mit inneren Hohlräumen (15, 15A), die zwischen Stützstegen (13, 14) definiert sind, die sich zwischen der zentralen Nabe (12) des Rotors und dem Wandprofil (8) erstrecken, **dadurch, dass** sich mindestens einige der Stege (13) zwischen der Nabe und den Spitzen der Lappen erstrecken und über die Länge des Rotors verlaufen und andere der Stege (14) sich zwischen der zentralen Nabe (8) und den Wurzeln (17) der Profilkonkavitäten (10) erstrecken und über die Länge des Rotors verlaufen.

2. Zahnradrotor nach Anspruch 1, wobei Paare der genannten inneren Hohlräume (15, 15A) symmetrisch innerhalb der Kernstruktur definiert sind.

3. Zahnradrotor nach Anspruch 2, bei dem die Abmessungen der Stege (13, 14) und der zentralen Nabe (12) so gewählt sind, dass die Wandstärken über den gesamten Rotor im Wesentlichen konstant bleiben.

4. Zahnradrotor nach Anspruch 3, bei dem an einem Ende des Rotors an den Verbindungsstellen der Stege (13, 14) und des Außenwandprofils (8) Magnete (16) implantiert sind.

5. Zahnradrotor nach Anspruch 4, wobei der technische Kunststoff Ryton ist.

## Revendications

1. Rotor à engrenages en matière plastique technique moulée par injection destiné à être utilisé dans un débitmètre à déplacement positif, ledit rotor comprenant un moyeu central (12) pour la rotation sur un axe, un profil de paroi externe (8) formant trois lobes (9) espacés de manière égale, disposés symétriquement autour dudit moyeu central (12) et avec des parties dudit profil de paroi externe (8) entre lesdits lobes qui sont concaves, **caractérisé par** une structure de noyau partiellement ouverte à l'intérieur dudit profil de paroi (8) avec des cavités internes (15, 15A) définis entre des bandes de support (13, 14) s'étendant entre ledit moyeu central (12) du rotor et ledit profil de paroi (8), en ce qu'au moins certaines desdites bandes (13) s'étendent entre ledit moyeu et les crêtes des lobes et courent sur la longueur du rotor et d'autres desdites bandes (14) s'étendent entre ledit moyeu central (8) et les racines (17) des concavités (10) du profil et courent sur la longueur du rotor.

2. Rotor à engrenages selon la revendication 1, dans lequel des paires desdites cavités internes (15, 15A) sont définies symétriquement à l'intérieur de ladite structure de noyau.

3. Rotor à engrenages selon la revendication 2, dans lequel les dimensions des bandes (13, 14) et du moyeu central (12) sont choisies de telle sorte que les épaisseurs de paroi restent sensiblement constantes dans tout le rotor.

4. Rotor à engrenages selon la revendication 3, dans lequel des aimants (16) sont implantés dans une extrémité du rotor aux jonctions des bandes (13, 14) et du profil de la paroi extérieure (8).

5. Rotor à engrenages selon la revendication 4, dans lequel le plastique technique est du Ryton.
